# EUROPEAN PATENT SPECIFICATION

(11) **EP 3 204 560 B1**
(45) Date of publication and mention of the grant of the patent: **05.12.2018**
(21) Application number: 15778351.5
(22) Date of filing: 28.09.2015
(51) Int. Cl.: E02B 15/10

(54) **BRUSH WHEEL FOR COLLECTING OIL FROM A SURFACE OF WATER**
BÜRSTENRAD ZUM SAMMELN VON ÖL VON EINER WASSEROBERFLÄCHE
BROSSE CIRCULAIRE CONÇUE POUR RECUEILLIR DU PÉTROLE SUR UNE SURFACE D'EAU

(30) Priority: 07.10.2014 FI 20145877
(43) Date of publication of application: 16.08.2017
(73) Proprietor: Meritaito OY, 00180 Helsinki (FI)
(72) Inventor: NORDSTRÖM, Lauri, FI-00180 Helsinki (FI)
(74) Representative: Boco IP Oy Ab
(86) International application number: PCT/FI2015/050642
(87) International publication number: WO 2016/055692

(56) References cited:
- US-A- 4 039 454
- US-A- 4 575 426

## Description

### FIELD OF THE INVENTION

The invention relates to a brush wheel, and particularly to a brush wheel for collecting oil from a surface of water. The present invention further concerns a method for collecting oil from a surface of water.

### BACKGROUND OF THE INVENTION

A skimmer of a brush wheel type for collecting oil from a surface of water is disclosed for example in US 4555338 A, WO 2006/113784 A2 and WO 2007/059606 A1. US 4575426 A discloses a brush wheel for collecting oil from a surface of water according to the preamble of claim 1.

A problem with the known brush wheels is that the oil collecting efficiency from water having blocks of ice floating on the surface of the water is poor because oil tend to stick to the blocks of ice and not to the bristles of the brush wheel.

### BRIEF DESCRIPTION OF THE INVENTION

An object of the present invention is to provide a brush wheel and a method for collecting oil so as to solve the above problem.

The object of the invention is achieved by a brush wheel and a method for collecting oil which are characterized by what is stated in the independent claims.

The preferred embodiments of the invention are disclosed in the dependent claims.

The invention is based on the idea of providing a brush wheel for collecting oil from a surface of water, the brush wheel comprising protrusions for contacting with ice floating on the surface of water and moving the ice in the direction of rotation when the brush wheel is rotated.

An advantage of the brush wheel of the invention is that the protrusions push the oily blocks of ice under the surface of water thus making the oil disengage the blocks of ice and gather on the surface of water. Then the oil floating on the surface of water can be collected to the bristles of the brush wheel and further to a waste oil container. Ability to collect oil from water having ice enables using the brush wheel in arctic conditions.

### BRIEF DESCRIPTION OF THE DRAWINGS

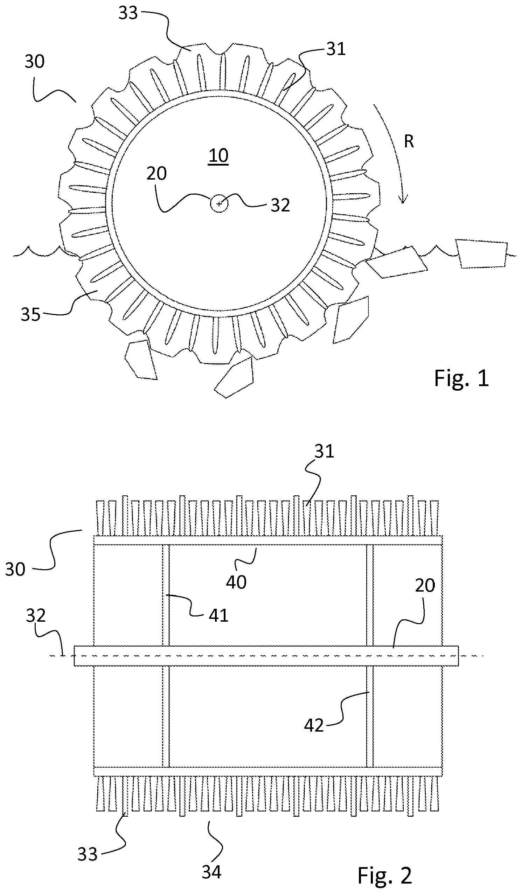

In the following the invention will be described in greater detail by means of preferred embodiments with reference to the accompanying drawings, in which
Figure 1 is a schematic side view of a brush wheel according to an embodiment of the invention in operation; and
Figure 2 is a schematic cross section of a brush wheel according to an embodiment of the invention.

### DETAILED DESCRIPTION OF THE INVENTION

The invention relates to a brush wheel for collecting oil from a surface of water, the brush wheel comprising an annular brush part 30 comprising bristles 31 extending away from the center of annulus 32 of the annular brush part 30, wherein the brush wheel further comprises protrusions 33 for contacting with ice floating on the surface of water and moving the ice in the direction of rotation R when the brush wheel is rotated.

In other words the brush wheel further comprises protrusions 33 for contacting with ice floating on the surface of water and pushing ice under the surface of water when the brush wheel is rotated. The brush wheel is rotated about the center of annulus 32 of the annular brush part 30. Preferably ice is in form of pieces of ice.

According to an embodiment at the protrusions 33 are arranged evenly along the perimeter of the annular brush wheel. Preferably the shape of the protrusion is such that the protrusions 33 are able to move the ice regardless of the direction of rotation R of the brush wheel. In other words the brush wheel can be used in oil collecting systems where the brush wheel is rotated in either direction.

Rotation of the brush wheel in direction opposite of the normal operation direction of rotation may be needed for cleaning the brush wheel.

According to an embodiment the protrusions 33 are pins arranged radially to the annular brush part 30.

According to an embodiment the annular brush part 30 comprises at least two annular brush sections 34 arranged coaxially. According to an embodiment the protrusions 33 are plate parts arranged between the annular brush sections 34. The annular plate parts can be attached to the frame 10, to the annular brush part 30 or to the annular brush sections 34.

According to an embodiment the annular brush part 30 comprises an annular plate 35 arranged between the annular brush sections 34, wherein the protrusions 33 are comprised in the annular plate 35. Preferably the annular plate 35 comprises an outer edge extending away from the center of annulus 32 of the annular plate 35, and the outer edge is shaped so that protrusions 33 are provided to the annular plate 35. The annular plate 35 can be attached to the frame 10 or to the annular brush part 30.

According to an embodiment the annular brush part 30 comprises several annular brush sections 34 and several annular plates 35 arranged alternately between the annular brush sections 34.

Preferably the thickness of the plate parts or the annular plate 35 is such that the plate is able to withstand the contact with ice without permanent deformation. According to an embodiment the thickness of the plate parts or the annular plate 35 is 2 to 5 mm.

According to an embodiment the protrusions 33 extend 1 to 8 cm further from the center of annulus 32 of the annular brush part 30 than the bristles 31. By extending further than the bristles 31, the protrusions 33 protect the bristles 31 from the ice and are able to move the ice before the ice contacts the bristles 31.

According to an embodiment the protrusions 33 are made from rubber or metal. According to an embodiment the protrusions 33 are made from steel. Preferably the pins are made from metal, such as steel.

According to an embodiment the brush wheel comprises heating means 40 for heating at least part of the brush wheel. According to an embodiment the brush wheel comprises heating means 40 for heating the protrusions 33. Heating the at least part of the brush wheel prevents accumulation of ice on the surfaces of the brush wheel.

According to an embodiment the brush wheel comprises a frame 10 and an axis 20 supporting the frame 10, wherein annular brush part 30 is supported by the frame 10 and arranged coaxially with the axis 20. The axis 20 is arranged concentric with the center of annulus 32 of the annular brush part 30 and the brush wheel is rotated about the axis 20.

According to an embodiment the brush wheel comprises steam channeling means 41 for channeling steam via the axis 20 to the annular brush part 30. Steam generated outside the brush wheel is led through the steam channeling means 41 to the annular brush part 30. The steam channeling means 41 has at least partly been arranged inside the axis 20. In other words steam generated outside is fed through the axis 20 and the steam channeling means 41 to the annular brush part 30. Preferably the steam is arranged to heat the protrusions 33.

According to an embodiment the brush wheel comprises water channeling means 42 for channeling water from the annular brush part 30 via the axis 20. Water formed from melting ice is collected through the water channeling means 42 and led to outside of the brush wheel. The water channeling means 42 has at least partly been arranged inside the axis (20). In other words water formed from melting ice is collected through water channeling means 42 and led through axis 20 to outside of the brush wheel. Preferably the water collection is at least partly powered by a vacuum generated to the water channeling means 42.

The invention also relates to a method for collecting oil from a surface of water comprising ice, the method comprising
providing a brush wheel as defined above at least partly submerged in water;
rotating the at least partly submerged brush wheel;
pushing ice floating at least partly on the surface of water and contacting the brush wheel to under the surface of water using protrusions 33 comprised in the rotating brush wheel, for separating oil from ice to the surface of water;
collecting oil to the bristles 31 of the rotating brush wheel; and
scraping oil from the bristles 31 of the rotating brush wheel.

According to an embodiment the method further comprises spraying water or steam on ice before pushing ice contacting the brush wheel under the surface of water. Spraying water or steam on ice improves separation of oil from the ice. Water can be sprayed on ice continuously, periodically or when required.

According to an embodiment the method further comprises heating at least part of the brush wheel. According to an embodiment the method further comprises heating the protrusions 33.

## Claims

1. A brush wheel for collecting oil from a surface of water, the brush wheel comprising an annular brush part (30) comprising bristles (31) extending away from a center of annulus (32) of the annular brush part (30), **characterized in that** the brush wheel comprises protrusions (33) for contacting with ice floating on the surface of water and moving the ice in the direction of rotation (R) when the brush wheel is rotated.

2. A brush wheel according to claim 1, **characterized in that** the protrusions (33) are arranged evenly along the perimeter of the annular brush wheel.

3. A brush wheel according to claim 1 or 2, **characterized in that** the protrusions (33) are pins arranged radially to the annular brush part (30).

4. A brush wheel according to claim 1 or 2, **characterized in that** the annular brush part (30) comprises at least two annular brush sections (34) arranged coaxially.

5. A brush wheel according to claim 4, **characterized in that** the protrusions (33) are plate parts arranged between the annular brush sections (34).

6. A brush wheel according to claim 4, **characterized in that** the annular brush part (30) comprises an annular plate (35) arranged between the annular brush sections (34), wherein the protrusions (33) are comprised in the annular plate (35).

7. A brush wheel according to claim 5 or 6, **characterized in that** the thickness of the plate parts or the annular plate (35) is 2 to 5 mm.

8. A brush wheel according to any one of the preceding claims, **characterized in that** the protrusions (33) extend 1 to 8 cm further from the center of annulus (32) of the annular brush part (30) than the bristles (31).

9. A brush wheel according to any one of the preceding claims, **characterized in that** the protrusions (33) are made from rubber or metal.

10. A brush wheel according to claim 9, **characterized in that** the protrusions (33) are made from steel.

11. A brush wheel according to any one of the preceding claims, **characterized in that** the brush wheel comprises heating means (40) for heating at least part of the brush wheel.

12. A brush wheel according to any one of the preceding claims, **characterized in that** the brush wheel comprises a frame (10) and an axis (20) supporting the frame (10), wherein annular brush part (30) is supported by the frame (10) and arranged coaxially with the axis (20).

13. A brush wheel according to claim 12, **characterized in that** the brush wheel comprises steam channeling means (41) for channeling steam via the axis (20) to the annular brush part (30).

14. A brush wheel according to claim 12 or 13, **characterized in that** the brush wheel comprises water channeling means (42) for channeling water from the annular brush part (30) via the axis (20).

15. A method for collecting oil from a surface of water comprising ice, **characterized in that** the method comprises
providing a brush wheel according to any one of claims 1 to 14 at least partly submerged in water;
rotating the at least partly submerged brush wheel;
pushing ice floating at least partly on the surface of water and contacting the brush wheel to under the surface of water using protrusions (33) comprised in the rotating brush wheel, for separating oil from ice to the surface of water;
collecting oil to the bristles (31) of the rotating brush wheel; and scraping oil from the bristles (31) of the rotating brush wheel.

16. A method according to claim 15, **characterized in that** the method further comprises spraying water or steam on the ice before pushing ice contacting the brush wheel under the surface of water.

17. A method according to claim 15 or 16, **characterized in that** the method further comprises heating at least part of the brush wheel.

## Patentansprüche

1. Bürstenrad zum Sammeln von Öl auf einer Wasseroberfläche, wobei das Bürstenrad umfasst: einen ringförmigen Bürstenteil (30), der Borsten (31) umfasst, die sich weg von einer Ringraummitte (32) des ringförmigen Bürstenteils (30) erstrecken, **dadurch gekennzeichnet, dass** das Bürstenrad Vorsprünge (33) umfasst, um Kontakt mit auf der Wasseroberfläche schwimmendem Eis aufzunehmen und bei Drehung des Bürstenrads das Eis in Drehrichtung (R) zu bewegen.

2. Bürstenrad nach Anspruch 1, **dadurch gekennzeichnet, dass** die Vorsprünge (33) entlang des Umfangs des ringförmigen Bürstenrads gleichmäßig angeordnet sind.

3. Bürstenrad nach Anspruch 1 oder 2, **dadurch gekennzeichnet, dass** die Vorsprünge (33) am ringförmigen Bürstenrad (30) radial angeordnete Stifte sind.

4. Bürstenrad nach Anspruch 1 oder 2, **dadurch gekennzeichnet, dass** der ringförmige Bürstenteil (30) mindestens zwei koaxial angeordnete ringförmige Bürstenabschnitte (34) umfasst.

5. Bürstenrad nach Anspruch 4, **dadurch gekennzeichnet, dass** die Vorsprünge (33) zwischen den ringförmigen Bürstenabschnitten (34) angeordnete Plattenteile sind.

6. Bürstenrad nach Anspruch 4, **dadurch gekennzeichnet, dass** der ringförmige Bürstenteil (30) eine zwischen den ringförmigen Bürstenabschnitten (34) angeordnete ringförmige Platte (35) umfasst, wobei die Vorsprünge (33) in der ringförmigen Platte (35) enthalten sind.

7. Bürstenrad nach Anspruch 5 oder 6, **dadurch gekennzeichnet, dass** die Dicke der Plattenteile oder der ringförmigen Platte (35) 2 bis 5 mm beträgt.

8. Bürstenrad nach einem der vorhergehenden Ansprüche, **dadurch gekennzeichnet, dass** die Vorsprünge (33) sich ausgehend von der Ringraummitte (32) des ringförmigen Bürstenteils (30) 1 bis 8 cm weiter erstrecken als die Borsten (31).

9. Bürstenrad nach einem der vorhergehenden Ansprüche, **dadurch gekennzeichnet, dass** die Vorsprünge (33) aus Gummi oder Metal hergestellt sind.

10. Bürstenrad nach Anspruch 9, **dadurch gekennzeichnet, dass** die Vorsprünge (33) aus Stahl hergestellt sind.

11. Bürstenrad nach einem der vorhergehenden Ansprüche, **dadurch gekennzeichnet, dass** das Bürstenrad Heizmittel (40) umfasst, um mindestens ein Teil des Bürstenrads zu beheizen.

12. Bürstenrad nach einem der vorhergehenden Ansprüche, **dadurch gekennzeichnet, dass** das Bürstenrad einen Rahmen (10) und eine den Rahmen (10) stützende Achse (20) umfasst, wobei der ringförmige Bürstenteil (30) vom Rahmen (10) gestützt wird und koaxial zur Achse (20) angeordnet ist.

13. Bürstenrad nach Anspruch 12, **dadurch gekennzeichnet, dass** das Bürstenrad dampfkanalisierende Mittel (41) umfasst, um Dampf über die Achse (20) zum ringförmigen Bürstenteil (30) zu kanalisieren.

14. Bürstenrad nach Anspruch 12 oder 13, **dadurch gekennzeichnet, dass** das Bürstenrad wasserkanalisierende Mittel (42) umfasst, um Wasser über die Achse (20) aus dem ringförmigen Bürstenteil (30) zu kanalisieren.

15. Verfahren zum Sammeln von Öl auf einer Eis umfassenden Wasseroberfläche, **dadurch gekennzeichnet, dass** das Verfahren umfasst:
Bereitstellen eines mindestens teilweise in Wasser eingetauchten Bürstenrads nach einem der Ansprüche 1 bis 14;
Drehen des mindestens teilweise eingetauchten Bürstenrads;
Drücken von Eis, das mindestens teilweise auf der Wasseroberfläche schwimmt und im Kontakt mit dem Bürstenrad ist, unter die Wasseroberfläche mit Hilfe von im drehenden Bürstenrad enthaltenen Vorsprüngen (33), um Öl von Eis zur Wasseroberfläche hin zu trennen;
Sammeln von Öl an den Borsten (31) des rotierenden Bürstenrads; und
Abstreifen von Öl von den Borsten (31) des rotierenden Bürstenrads.

16. Verfahren nach Anspruch 15, **dadurch gekennzeichnet, dass** das Verfahren ferner umfasst: Aufsprühen von Wasser oder Dampf auf das Eis, bevor das in Kontakt mit dem Bürstenrad befindliche Eis unter die Wasseroberfläche gedrückt wird.

17. Verfahren nach Anspruch 15 oder 16, **dadurch gekennzeichnet, dass** das Verfahren ferner umfasst: Beheizen mindestens eines Teils des Bürstenrads.

## Revendications

1. Roue à brosse pour récupérer de l'huile sur une surface d'eau, ladite roue à brosse comprenant une partie brosse annulaire (30) comprenant des crins (31) s'étendant à distance d'un centre d'espace annulaire (32) de la partie brosse annulaire (30), **caractérisée en ce que** la roue à brosse comprend des protubérances (33) pour prendre contact avec de la glace flottant sur la surface d'eau et pour déplacer la glace dans le sens de la rotation (R) lorsque la roue à brosse tourne.

2. Roue à brosse selon la revendication 1, **caractérisée en ce que** les protubérances (33) sont disposées uniformément le long du périmètre de la roue à brosse annulaire.

3. Roue à brosse selon la revendication 1 ou 2, **caractérisée en ce que** les protubérances (33) sont des ergots disposés radialement par rapport à la partie brosse annulaire (30).

4. Roue à brosse selon la revendication 1 ou 2, **caractérisée en ce que** la partie brosse annulaire (30) comprend au moins deux segments de brosse annulaires (34) disposés coaxialement.

5. Roue à brosse selon la revendication 4, **caractérisée en ce que** les protubérances (33) sont des parties de plaque disposées entre les segments de brosse annulaires (34).

6. Roue à brosse selon la revendication 4, **caractérisée en ce que** la partie brosse annulaire (30) comprend une plaque annulaire (35) disposée entre les segments de brosse annulaires (34), lesdites protubérances (33) étant comprises dans la plaque annulaire (35).

7. Roue à brosse selon la revendication 5 ou 6, **caractérisée en ce que** l'épaisseur des parties de plaque ou de la plaque annulaire (35) est de 2 à 5 mm.

8. Roue à brosse selon l'une des revendications précédentes, **caractérisée en ce que** les protubérances (33) s'étendent à une distance du centre d'espace annulaire (32) de la partie brosse annulaire (30) plus longue de 1 à 8 cm que les crins (31).

9. Roue à brosse selon l'une des revendications précédentes, **caractérisée en ce que** les protubérances (33) sont faites en caoutchouc ou en métal.

10. Roue à brosse selon la revendication 9, **caractérisée en ce que** les protubérances (33) sont faites en acier.

11. Roue à brosse selon l'une des revendications précédentes, **caractérisée en ce que** la roue à brosse comprend des moyens de chauffage (40) pour chauffer au moins une partie de la roue à brosse.

12. Roue à brosse selon l'une des revendications précédentes, **caractérisée en ce que** la roue à brosse comprend un cadre (10) et un axe (20) supportant le cadre (20), ladite partie brosse annulaire (30) étant supportée par le cadre (10) et disposée coaxialement à l'axe (20).

13. Roue à brosse selon la revendication 12, **caractérisée en ce que** la roue à brosse comprend des moyens de canalisation de vapeur (41) pour canaliser de la vapeur, via l'axe (20), vers la partie brosse annulaire (30).

14. Roue à brosse selon la revendication 12 ou 13, **caractérisée en ce que** la roue à brosse comprend des moyens de canalisation d'eau (42) pour canaliser de l'eau, via l'axe (20), en provenance de la partie brosse annulaire (30).

15. Procédé de récupération d'huile sur une surface d'eau comprenant de la glace, **caractérisé en ce que** ledit procédé comprend les étapes consistant à :
prévoir une roue à brosse selon l'une des revendications 1 à 14 au moins partiellement immergée dans l'eau;
faire tourner la roue à brosse au moins partiellement immergée dans l'eau;
pousser la glace, qui flotte au moins partiellement à la surface de l'eau et a contact avec la roue à brosse, sous la surface de l'eau à l'aide de protubérances (33) comprises dans la roue à brosse tournante pour séparer l'huile de la glace vers la surface d'eau;
récupérer l'huile par les crins (31) de la roue à brosse tournante; et
enlever par raclage l'huile aux crins (31) de la roue à brosse tournante.

16. Procédé selon la revendication 15, **caractérisé en ce que** le procédé comprend également l'étape consistant à projeter de l'eau ou de la vapeur sur la glace avant de pousser sous la surface d'eau la glace ayant contact avec la roue à brosse.

17. Procédé selon la revendication 15 ou 16, **caractérisé en ce que** le procédé comprend également l'étape consistant à chauffer au moins une partie de la roue à brosse.
